Europäisches Patentamt

European Patent Office

Office européen des brevets

(11) Veröffentlichungsnummer: **0 111 772**
A1

# (12) EUROPÄISCHE PATENTANMELDUNG

(21) Anmeldenummer: **83111710.6**

(22) Anmeldetag: **23.11.83**

(51) Int. Cl.³: **B 23 K 7/10**

(30) Priorität: **21.12.82 DE 3247634**

(43) Veröffentlichungstag der Anmeldung:
**27.06.84 Patentblatt 84/26**

(84) Benannte Vertragsstaaten:
**AT FR GB IT**

(71) Anmelder: **MESSER GRIESHEIM GMBH**
**Hanauer Landstrasse 330**
**D-6000 Frankfurt/Main 1(DE)**

(72) Erfinder: **Pfeuffer, Alfred**
**Spechtstrasse 14**
**D-6078 Neu-Isenburg(DE)**

(54) **Strang-Brennschneidmaschine mit automatischer Anschneid-steuerung.**

(57) Bei einer Strang-Brennschneidmaschine soll die automatische Anschneidsteuerung eines Brenners sowohl in horizontalerals auch in vertikaler Richtung an einem Strang in der Schneidebene mit einem einzigen Tasthebel erfolgen. Dies wird dadurch erreicht, daß der Tasthebel am Brennerhöhen-Schlitten verschwenkbar gelagert ist.

FIG.1

EP 0 111 772 A1

- 1 -

MESSER GRIESHEIM GMBH                    MG 1419

Kennwort: Anschneidsteuerung             EM  1079

Erfinder: Alfred Pfeuffer                 Ordner: V

## Strang-Brennschneidmaschine mit automatischer Anschneid-steuerung

Die Erfindung betrifft eine Strang-Brennschneidmaschine mit automatischer Anschneidsteuerung gemäß dem Oberbegriff des Anspruches 1.

Derartige Brennschneidmaschinen werden in Stranggießanlagen zum Unterteilen von einem oder auch mehreren nebeneinanderliegenden Gußsträngen verwendet.

Für einen störungsfreien Betrieb einer solchen Brennschneidmaschine ist eine sicher arbeitende Anschneidsteuerung für die Positionierung des Brenners an dem Gußstrang erforderlich.

Anschneidsteuerung mit Tasthebeln, die wegabhängig über Endschalter beim Erreichen der Anschnittstelle in dem automatischen Ablauf des Schnittes eine Schaltfunktion erfüllen, sind bekannt (DE-PS 22 15 678, DE-AS 24 17 694).
Obwohl von verschiedener Ausführung, haben diese Steuerungen eines gemeinsam: Sie beeinflussen mit dem Tasthebel (oder ähnlichem Organ) nur eine einzige, und zwar die
Schneidbewegung des Brenners an der Anschnittstelle.

Der Erfindung liegt die Aufgabe zugrunde, mittels eines
einzigen Tasthebels den Brenner in seiner Anschneidstelle
an einem Strang sowohl in horizontaler als auch in vertikaler Richtung in der Schneidebene zu positionieren.

Diese Aufgabe   wird erfindungsgemäß mit den Merkmalen
des kennzeichnenden Teils des Hauptanspruches gelöst.

Weiterbildungen der Erfindung sind in den Unteransprüchen
angegeben.

Die Erfindung ermöglicht es, den Brenner  mit sehr geringem technischen Aufwand automatisch in seine  Anschneidstellung zu bringen.

Ein Ausführungsbeispiel der Erfindung ist in der Zeichnung
dargestellt und wird im folgenden näher beschrieben. Es
zeigen:

Fig.1   eine Vorderansicht eines Teils
        einer Brennschneidmaschine,

Fig.1a  eine Teilansicht der Brennschneidmaschine, bei der der Tasthebel
        an einem Strang seitlich anliegt,

Fig. 2 und 3   Stellungen des Tasthebels
an der Oberseite des Stranges.

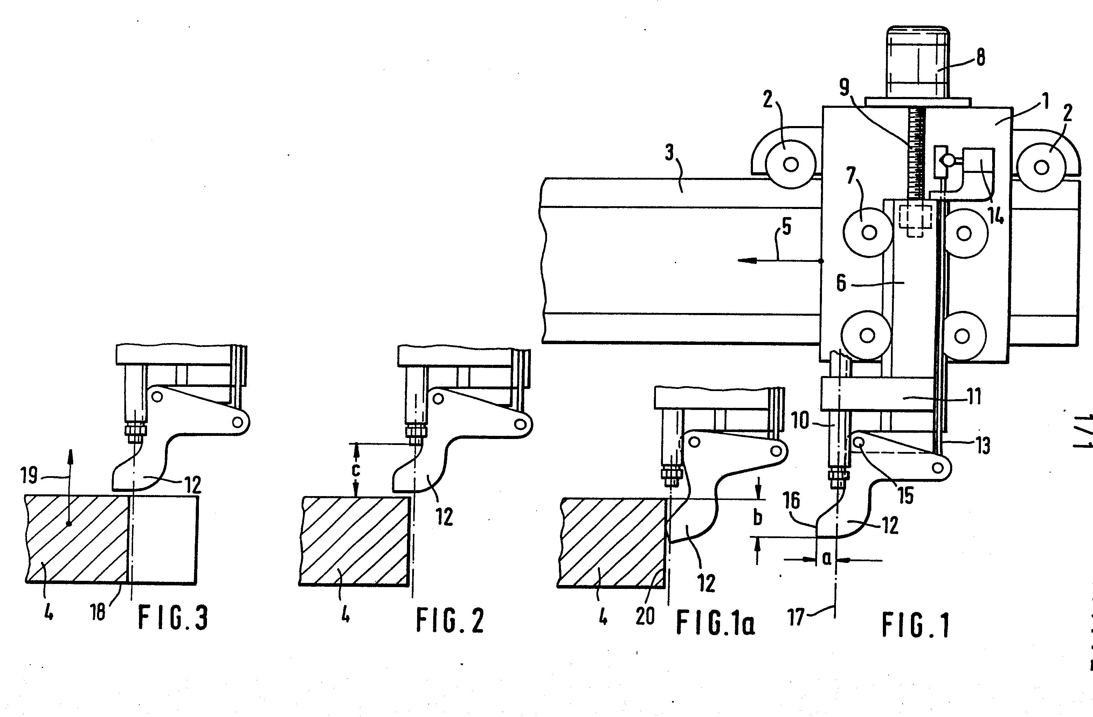

In Fig. 1 ist ein Brennerwagen 1, der mit Rollen 2 auf einer Laufbahn 3, die sich an einer Strang-Brennschneidmaschine befindet, dargestellt. Die nicht dargestellte Strang-Brennschneidmaschine ist üblicherweise zum Synchronlauf mit dem Strang 4 gekuppelt. Der Brennerwagen 1 bewegt sich durch einen nicht dargestellten Antrieb mit Schneidgeschwindigkeit in  Pfeilrichtung 5. Üblicherweise erfolgt der Vorschub des Brennerwagens 1 in Pfeilrichtung 5 von seiner in Fig.1 gezeigten Nullstellung bis zur Anschneidstellung in Fig.1a mit sog. Eilvorlauf.

An dem Brennerwagen 1 ist der Brennerhöhenschlitten 6 in vier Führungsrollen 7 derart gelagert, daß er mit dem Motor 8 über die Spindel 9 in der Höhe verstellt werden kann.

Der Brenner 10 ist mit seiner Halterung 11 an dem Höhenschlitten 6 befestigt.

In einer  "hinter" dem Brenner liegenden Ebene befindet sich der Tasthebel 12 mit der Taststange 13, die bei entsprechender Bewegung den Endschalter 14 betätigt. Das Gelenk 15 des Tasthebels 12 ist mit dem Höhenschlitten 6 verbunden. Der Tasthebel 12 hat eine vordere Anschlagkante 16, die gegen den Strang 4 anstößt und um das Maß "a" in der Bewegungsrichtung 5 dem Schneidstrahl 17 des Schneidbrenners 10 voraus-läuft.

Erreicht die Anschlagkante 16 den Strang 4, so wird der Tasthebel 12, wie in Fig.1a dargestellt, ausgelenkt und betätigt durch seine Drehung um das Gelenk 15  die Taststange 13 und den Endschalter 14.

Dieser Endschalter 14 stoppt die Bewegung 5 oder schaltet
sie von Eilgang auf langsame Anschneidgeschwindigkeit.
Gleichzeitig wird mit dem Endschalter 14 der Höhenverstellmotor 8 eingeschaltet, der den Höhenschlitten 6 mit der
Spindel 9 so lange nach oben fährt, bis der Tasthebel 12,
z.B. durch sein Eigengewicht, seine Ausgangsstellung, wie
in Fig.2,3 dargestellt, wieder einnimmt. Hierdurch gelangt
der Endschalter 14 wieder in seine in Fig.1 gezeigte Mittelstellung und wird damit ausgeschaltet, was als Signal
für das Ausschalten des Höhenmotors 8 benutzt wird.

Der Höhenschlitten 6 hat nunmehr den Weg "b" zurückgelegt. Diese automatische Höheneinstellung entsprechend
der Strangdicke ist völlig unabhängig von der Länge des
Weges "b". Die einzige Voraussetzung ist, daß der Taster
in seiner in Fig.1 dargestellten Lage unterhalb der Strangoberfläche liegt, und dann solange nach oben fährt, bis
die jeweilige Strangdicke erreicht ist.

In Fig.2 zeigt das Maß "c" den vorgewählten, richtigen
Düsenabstand des Schneidbrenners zur Strangoberfläche.

Der weitere Schneidablauf nach erfolgtem Anschnitt mit
langsamer Schneidgeschwindigkeit kann über bekannte Schaltelemente ausgeführt werden.

Die Lage des Gelenkes 15 kann in Schneidrichtung 5 gesehen sowohl vor, in oder hinter der durch die Seitenfläche
20 des Stranges 4 definierten Ebene liegen. Durch die
kreisförmige Bewegung am unteren Ende des Tasthebels gegenüber dem Strang 4 ergeben sich unterschiedliche Relativbewegungen. Im Ausführungsbeispiel ist das Gelenk 15 in
Schneidrichtung 5 gesehen vor der Seitenfläche 20 des Stranges 4 angeordnet. Dies hat zur Folge, daß beim Zurückschwenken des Tasthebels 12 in seine Grundstellung (siehe Fig.2,3) der Tasthebel 12 einen gewissen Abstand zur Strangoberfläche einhält.

Fig.3 zeigt die gleiche Stellung des Tasthebels 12 und des Schneidbrenners 10 wie in Fig.2 nach einem angenommenen Schneidweg im Strang 4. Da es bei Stranggießanlagen hin und wieder vorkommt, daß sich der Strang 4 von der Rollgang-Oberkante 18 in Richtung 19 abhebt, bewirkt eine Berührung des Tasthebels 12 durch den Strang 4 eine Auslenkung des Tasthebels 12, was wiederum über Taststange 13 und Endschalter 14 eine kurzzeitige Aufwärtsbewegung des Brenners 10 auslöst. Der Tasthebel ist somit auch für eine sogenannte Sicherheitsschaltung während des eigentlichen Schneidvorganges zu verwenden.

Nach vollendetem Schnitt fährt der Brennerwagen 1 in seine in Fig.1 dargestellte Ausgangsstellung zurück und wird von einem nicht dargestellten Endschalter in dieser Nullstellung gestoppt. Über eine ebenfalls nicht dargestellte Automatiksteuerung fährt dann der Verstellmotor 8 über die Spindel 9 den Brennerhöhenschlitten 6 wieder nach unten in die in Fig.1 dargestellte Nullstellung. Ein ebenfalls nicht dargestellter Endschalter zwischen Höhenschlitten 6 und Brennerwagen 1 schaltet den Verstellmotor 8 in dieser Nullstellung aus.

Mü/Hi

MG 1419

Patentansprüche

1. Strang-Brennschneidmaschine mit automatischer Anschneidsteuerung für einen Brenner, der an einem in der Höhe verstellbar gelagerten und an einem Brennerwagen angeordenten Schlitten befestigt ist, und mit einem schwenkbar gelagerten Tasthebel, der mit einem Endschalter verbunden ist,
dadurch gekennzeichnet,
daß der Tasthebel (12) an dem Schlitten (6) gelagert ist und in der Anschneidstellung des Brenners (10) an der in Schneidrichtung vorderen Seitenfläche (20) des Stranges (4) mit seiner Anschlagkante (16) anlegbar ist, wobei über den Endschalter (14) sowohl der den Brennerwagen (1) in Richtung (5) antreibbare Motor als auch der den Schlitten (6) in Richtung (19) antreibbare Motor (8) verstellbar steuerbar ist.

2. Strang-Brennschneidmaschine nach Anspruch 1,
dadurch gekennzeichnet,
daß mit dem Tasthebel (12) eine Taststange (13) verbundden ist, über die der Endschalter (14) betätigbar ist.

3. Strang-Brennschneidmaschine nach Anspruch 1 oder 2,
dadurch gekennzeichnet,
daß der Tasthebel (12) mittels eines Gelenkes (15) schwenkbar gelagert ist, das in Schneidrichtung (5) gesehen in Bezug auf die durch die Seitenfläche (20) des Stranges (4) definierte Ebene vor, in oder hinter dieser Ebene angeordnet ist.

4. Strang-Brennschneidmaschine nach einem der Ansprüche 1 bis 3, dadurch gekennzeichnet, daß sich der Tasthebel (12) während des Schneidens ohne Kontakt mit dem Strang (4) in seiner vorgegebenen Nullstellung befindet.

5. Strang-Brennschneidmaschine nach Anspruch 4, dadurch gekennzeichnet, daß der Tasthebel (12) durch Berührung mit der Oberseite des Stranges (4) aus seiner Nullstellung verschwenkbar ist.

6. Strang-Brennschneidmaschine nach Anspruch 5, dadurch gekennzeichnet, daß der Endschalter (14) durch Verschwenken des Tasthebels (12) in dessen beiden Drehrichtungen mit gleicher Wirkung aktivierbar ist.

Mü/Hi

FIG.3

FIG.2

FIG.1a

FIG.1

1/1

0111772

Europäisches
Patentamt

**EUROPÄISCHER RECHERCHENBERICHT**

**0111772**
Nummer der Anmeldung

EP 83 11 1710

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,Y | DE-B-2 215 678 (MESSER GRIESHEIM) <br> * Spalte 1, Zeilen 4-18 * | 1-5 | B 23 K 7/10 |
| Y | DE-B-1 146 333 (MESSER) <br> * Figur 1 * | 1,6 | |
| A | DE-A-2 553 488 (GEGA LOTZ) | | |
| A | US-A-2 249 413 (MESSER) <br> * Figur 1 * | 6 | |
| A | EP-A-0 040 925 (UNION CARBIDE CANADA) | | |

RECHERCHIERTE
SACHGEBIETE (Int. Cl. ³)

B 23 K

Der vorliegende Recherchenbericht wurde für alle Patentansprüche erstellt.

| Recherchenort <br> DEN HAAG | Abschlußdatum der Recherche <br> 16-03-1984 | Prüfer <br> HOORNAERT W. |
|---|---|---|

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503 03.82